# EUROPEAN PATENT APPLICATION

(11) **EP 4 789 835 A1**
(43) Date of publication of application: **12.08.2026**
(21) Application number: 24874608.3
(22) Date of filing: 01.10.2024
(51) Int. Cl.: B29C 35/02, C08J 3/24, C08L 27/12, C08L 27/18

(54) **RUBBER COMPOSITION AND METHOD FOR PRODUCING RUBBER COMPOSITION**

(30) Priority: 04.10.2023 JP 2023172422
(71) Applicant: AGC INC., Chiyoda-ku Tokyo 100-8405 (JP)
(72) Inventor: TAMURA, Tasuku, Tokyo 100-8405 (JP); KAWAI, Tsuyoshi, Tokyo 100-8405 (JP); KUNIMOTO, Akinobu, Tokyo 100-8405 (JP); YAMADA, Takeshi, Tokyo 100-8405 (JP)
(74) Representative: Müller-Boré & Partner Patentanwälte PartG mbB
(86) International application number: PCT/JP2024/035129
(87) International publication number: WO 2025/075007

(57) **Abstract**

Objects of the present invention are to provide a rubber composition with low haze and a method for producing a rubber composition. The rubber composition of the present invention includes a crosslinked product of a fluorinated copolymer, wherein the temperature T at which the rubber composition shows a minimum value of storage modulus E' in dynamic mechanical analyst at a measurement temperature of 23 to 200°C and a measurement frequency of 1 Hz is 55°C or higher.

## Description

### TECHNICAL FIELD

The present invention relates to a rubber composition and a method for producing a rubber composition.

### BACKGROUND ART

Rubber compositions containing crosslinked products of fluorinated copolymers are excellent in heat resistance, chemical resistance, oil resistance, weather resistance and the like, and are thus widely used as sealing materials (such as, for example, O-rings, packings, oil seals and gaskets) and cushioning materials in the fields of vehicles, ships, aircrafts, semiconductor equipment, medical equipment, general machinery, buildings and the like.

Patent Document 1 discloses, as a crosslinkable composition for forming such rubber compositions, a crosslinkable fluoroelastomer composition containing a fluoroelastomer and an aromatic compound with at least two crosslinkable unsaturated double bonds, and discloses a crosslinked article obtained by crosslinking of the crosslinkable fluoroelastomer composition.

### PRIOR ART DOCUMENTS

### PATENT DOCUMENTS

Patent Document 1: Japanese Patent No. 6304253

### DISCLOSURE OF INVENTION

### TECHNICAL PROBLEM

Resent years have seen a demand for improved performance of rubber compositions in various fields and, in particular, a demand for reduced haze of rubber compositions used for semiconductor equipment parts such as sealing materials and the like so as to facilitate detection of foreign substances. In response to this demand, the present inventors have made studies on rubber compositions containing crosslinked products of fluoroelastomer compositions with reference to Patent Document 1 and resultantly found that there is room for improvement in the haze of the rubber compositions.

In view of the above circumstances, it is an object of the present invention to provide a rubber composition low in haze. It is also an object of the present invention to provide a method for producing the rubber composition.

### SOLUTION TO PROBLEM

As a result of intensive studies made to achieve the above objects, the present inventors have found that a rubber composition containing a crosslinked product of a fluorinated copolymer, wherein the temperature at which the rubber composition shows a minimum value of storage modulus E' as measured by dynamic mechanical analysis at a measurement temperature of 23 to 200°C and a measurement frequency of 1 Hz is higher than or equal to a predetermined value, is low in haze, and thus have accomplished the present invention.

That is, the present inventors have found that the above objects can be achieved by the following configurations.
[1] A rubber composition comprising a crosslinked product of a fluorinated copolymer, wherein the temperature T at which the rubber composition shows a minimum value of storage modulus E' in dynamic mechanical analysis at a measurement temperature of 23 to 200°C and a measurement frequency of 1 Hz is 55°C or higher.
[2] The rubber composition according to [1], comprising no black filler.
[3] The rubber composition according to [1] or [2], wherein the fluorinated copolymer has units based on tetrafluoroethylene and units based on perfluoromethyl vinyl ether.
[4] The rubber composition according to [3], wherein the ratio of the content of the units based on tetrafluoroethylene to the content of the units based on perfluoromethyl vinyl ether in the fluorinated copolymer is 73/27 to 65/35 in terms of molar ratio.
[5] The rubber composition according to any one of [1] to [4], wherein the crosslinked product is a crosslinked product of the fluorinated copolymer and a compound with at least two double bonds.
[6] A method for producing a rubber composition, comprising: providing a crosslinkable composition containing a fluorinated copolymer and a crosslinking agent; performing pressurization treatment on the crosslinkable copolymer to obtain a precursor composition; and performing heat treatment on the precursor composition obtained by the pressurization treatment, wherein the pressurization treatment is performed to pressurize the crosslinkable composition at a surface pressure of 6.0 MPa or lower under a condition of 150°C or higher and lower than 155°C, or to pressurize the crosslinkable composition at a surface pressure of 10 MPa or lower under a condition of 155°C or higher.

### ADVANTAGEOUS EFFECTS OF INVENTION

According to the present invention, it is possible to obtain a rubber composition low in haze and a method for producing the rubber composition.

### BRIEF DESCRIPTION OF DRAWINGS

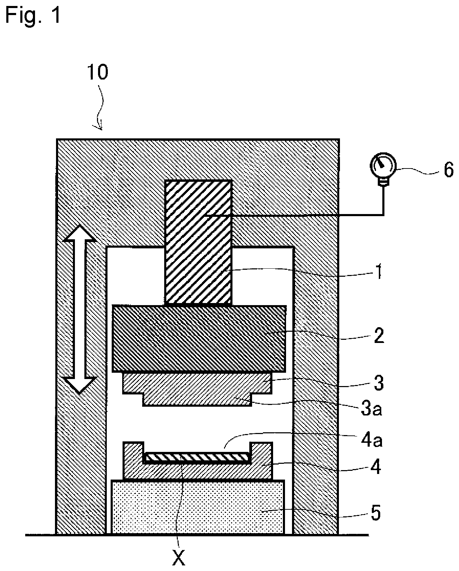

Fig. 1 is a schematic cross-sectional view illustrating a configuration example of a press machine used for production of a precursor composition for a rubber composition.

### DESCRIPTION OF EMBODIMENTS

The meanings of terms in the present invention are as follows.

A numerical range expressed using "to" means a range including numerical values described before and after "to" as the lower and upper limits.

A "unit" is a generic term for an atomic group derived from one molecule of monomer, which is formed directly by polymerization of the monomer, and an atomic group obtained by chemical conversion of a part of the aforementioned atomic group. A "unit based on a monomer" is hereinafter also simply referred to as a "unit".

A "rubber" means a rubber having properties as defined by JIS K6200 (2008), and is distinguished from a "resin".

### [Rubber Composition]

The rubber composition of the present invention (hereinafter also referred to as the "present rubber composition") contains a crosslinked product of a fluorinated copolymer, wherein the time T at which the rubber composition shows a minimum value of storage modulus E' in dynamic mechanical analysis at a measurement temperature of 23 to 200°C and a measurement frequency of 1 Hz is 55°C or higher.

The detailed reason why the rubber composition containing a crosslinked product of a fluorinated copolymer and showing a minimum value of storage modulus E' at a temperature T of 55°C or higher is low in haze is not clear, but is assumed to be as follows.

As an index of the rubber composition containing a crosslinked product of a fluorinated copolymer, the present inventors have focused on the temperature T at which the rubber composition shows a minimum value of storage modulus E' (hereinafter also referred to as a "minimum storage modulus E'ₘᵢₙ") in dynamic mechanical analysis at a measurement frequency of 1 Hz within a predetermined temperature range. A higher temperature T at which the rubber composition shows a minimum storage modulus E'ₘᵢₙ means that the crosslinking points (crosslinking structures) of the fluorinated copolymer constituting the crosslinked product in the rubber composition are uniformly distributed. The rubber composition containing the crosslinked product with such uniformly distributed crosslinking points is less likely to cause phase separation of uncrosslinked components etc., which presumably leads to reduced haze of the rubber composition.

For these reasons, it is assumed that the rubber composition with low haze is obtained.

Hereinafter, the constitution of the present rubber composition will be described below.

The present rubber composition contains a crosslinked product of a fluorinated copolymer.

Further, the present rubber composition may contain an additional component other than the crosslinked product of the fluorinated copolymer.

### [Crosslinked Product of Fluorinated Copolymer]

The crosslinked product of the fluorinated copolymer in the present rubber composition is a product of crosslinking of the fluorinated copolymer and is, for example, synthesized by crosslinking reaction of the fluorinated copolymer with a crosslinking agent.

As an example of a method for crosslinking the fluorinated copolymer (a method for producing the crosslinked product of the fluorinated copolymer), a method may be mentioned in which a crosslinkable composition containing the fluorinated copolymer and a crosslinking agent is subjected to pressurization treatment.

### <Crosslinkable Composition>

The crosslinkable composition containing the fluorinated copolymer and a crosslinking agent will be now described in detail below.

The crosslinkable composition may contain a crosslinking aid and other component as will be described later.

### (Fluorinated Copolymer)

The fluorinated copolymer is not particularly limited so far as it is a polymer that contains fluorine atoms and, when crosslinked, exhibits rubber properties. The fluorinated copolymer preferably has units based on a monomer containing a fluorine atom (hereinafter referred to as a "fluorinated monomer"). From the viewpoint of obtaining the rubber composition with lower haze, the fluorinated copolymer is preferably a perfluoropolymer.

Here, the term "perfluoropolymer" refers to a polymer having substantially no hydrogen atoms bonded to carbon atoms, but having fluorine atoms instead of such hydrogen atoms, and having a chain of carbon atoms as the main chain. The perfluoropolymer may have multivalent atoms other than carbon on the side chains, and the multivalent atoms are preferably oxygen atoms.

The expression "substantially no hydrogen atoms" means that the content of hydrogen atoms in the perfluoropolymer is 0.5 mass% or less, preferably 0.1 mass% or less, more preferably 0.07 mass% or less, still more preferably 0.05 mass% or less. The lower limit of the content of hydrogen atoms may be 0 mass%. When the content of hydrogen atoms is in the above range, good heat resistance or chemical stability can be easily obtained.

Specific examples of the fluorinated monomer include tetrafluoroethylene (hereinafter also referred to as "TFE"), a perfluoro(alkyl vinyl ether) (hereinafter also referred to as "PAVE"), vinylidene fluoride (hereinafter also referred to as "VdF"), hexafluoropropylene (hereinafter also referred to as "HFP") and chlorotrifluoroethylene (hereinafter also referred to as "CTFE").

PAVE units are units based on a perfluoro(alkyl vinyl ether).

The PAVE is preferably a monomer represented by the formula (1) with a view to achieving high polymerization reactivity and good rubber properties.

CF₂=CF-O-R^{f1} (1)

In the formula (1), R^{f1} represents a C₁₋₁₀ perfluoroalkyl group. The number of carbon atoms in R^{f1} is preferably 1 to 8, more preferably 1 to 6, still more preferably 1 to 5, particularly preferably 1 to 3, with a view to achieving higher polymerization reactivity.

The perfluoroalkyl group may be linear or branched.

Examples of the PAVE include perfluoromethyl vinyl ether (hereinafter also referred to as "PMVE"), perfluoroethyl vinyl ether (hereinafter also referred to as "PEVE") and perfluoropropyl vinyl ether (hereinafter also referred to as "PPVE"). Among others, PMVE and PPVE are preferred.

The fluorinated copolymer may have units based on a monomer other than the above monomer (hereinafter also referred to as "other monomer"). The other monomer may be, for example, a monomer with at least two polymerizable unsaturated bonds (hereinafter also referred to as "DVE"), a monomer represented by the following formula (5), ethylene or propylene (hereinafter also referred to as "P"). The other monomer may be a halogen-containing monomer (such as bromotrifluoroethylene or iodotrifluoroethylene) other than the above fluorinated monomer, the DVE and the monomer represented by the formula (5).

DVE units are units based on a monomer with at least two polymerizable unsaturated bonds.

The polymerizable unsaturated bonds can be, for example, carbon-carbon double bonds (C=C) or carbon-carbon triple bonds (C≡C).

The number of polymerizable unsaturated bonds in the DVE is preferably 2 to 6, more preferably 2 or 3, still more preferably 2, with a view to achieving higher polymerization reactivity.

The DVE preferably further contains a fluorine atom.

As the DVE, a monomer represented by the formula (2) is preferred.

(CR²¹R²²=CR²³)ₐ₂R²⁴ (2)

In the formula (2), R²¹, R²² and R²³ each independently represents a hydrogen atom, a fluorine atom, a methyl group or a trifluoromethyl group; a2 represents an integer of 2 to 6; R²⁴ represents a a2-valent C₁₋₁₀ perfluorohydrocarbon group or a group obtained by introducing an etheric oxygen atom to a terminal end or between carbon atoms of the perfluorohydrocarbon group. The plurality of R²¹, the plurality of R²² and the plurality of R²³ may be mutually the same or different, and are preferably mutually the same.

a2 is preferably 2 or 3, more preferably 2.

With a view to achieving higher polymerization reactivity of the DVE, it is preferred that each of R²¹, R²² and R²³ is a fluorine atom or a hydrogen atom. It is more preferred that all of R²¹, R²² and R²³ are fluorine atoms or hydrogen atoms. It is further more preferred that all of R²¹, R²² and R²³ are fluorine atoms in view of heat resistance and chemical resistance of the rubber composition.

R²⁴ can be either linear, branched or cyclic, and is preferably linear or branched, more preferably linear. The number of carbon atoms in R²⁴ is preferably 2 to 8, more preferably 3 to 7, still more preferably 3 to 6, particularly preferably 3 to 5.

R²⁴ may have or may not have an etheric oxygen atom, but preferably has an etheric oxygen atom with a view to achieving higher crosslinking reactivity and better rubber properties.

The number of etheric oxygen atoms in R²⁴ is preferably 1 to 6, more preferably 1 to 3, still more preferably 1 or 2. The etheric oxygen atom is preferably present at a terminal end of R²⁴.

As preferred examples of the monomer represented by the formula (2), a monomer represented by the formula (3) and a monomer represented by the formula (4) may be mentioned.

(CF₂=CF)₂R³¹ (3)

In the formula (3), R³¹ represents a divalent C₁₋₁₀ perfluorohydrocarbon group or a group obtained by introducing an etheric oxygen atom to a terminal end or between carbon atoms of the perfluorohydrocarbon group.

Examples of the monomer represented by the formula (3) include CF₂=CFO(CF₂)₂OCF=CF₂, CF₂=CFO(CF₂)₃OCF=CF₂, CF₂=CFO(CF₂)₄OCF=CF₂, CF₂=CFO(CF₂)₆OCF=CF₂, CF₂=CFO(CF₂)₈OCF=CF₂, CF₂=CFO(CF₂)₂OCF(CF₃)CF₂OCF=CF₂, CF₂=CFO(CF₂)₂O(CF(CF₃)CF₂O)₂CF=CF₂, CF₂=CFOCF₂O(CF₂CF₂O)₂CF=CF₂, CF₂=CFO(CF₂O)₃O(CF(CF₃)CF₂O)₂CF=CF₂, CF₂=CFOCF₂CF(CF₃)O(CF₂)₂OCF(CF₃)CF₂OCF=CF₂ and CF₂=CFOCF₂CF₂O(CF₂O)₂CF₂CF₂OCF=CF₂.

Among the examples of the monomer represented by the formula (3), preferred are CF₂=CFO(CF₂)₃OCF=CF₂ (hereinafter also referred to as "C3DVE") and CF₂=CFO(CF₂)₄OCF=CF₂ (hereinafter also referred to as "C4DVE").

(CH₂=CH)₂R⁴¹ (4)

In the formula (4), R⁴¹ represents a divalent C₁-₁₀ perfluorohydrocarbon group or a group obtained by introducing an etheric oxygen atom to a terminal end or between carbon atoms of the perfluorohydrocarbon group.

Examples of the monomer represented by the formula (4) include CH₂=CH(CF₂)₂CH=CH₂, CH₂=CH(CF₂)₄CH=CH₂ and CH₂=CH(CF₂)₆CH=CH₂.

Among the examples of the monomer represented by the formula (4), preferred is CH₂=CH(CF₂)₆CH=CH₂ (hereinafter also referred to as "C6DVE").

During copolymerization with the DVE, polymerizable double bonds at the terminal ends of the DVE react to form the fluorinated copolymer with branched chains.

The formula (5) is as follows.

CF₂=CF-O-R^{f2} (5)

In the formula (5), R^{f2} represents a C₁₋₈ perfluoroalkyl group having one to five etheric oxygen atoms. The number of carbon atoms in R^{f2} is preferably 1 to 6, more preferably 1 to 5.

Examples of the monomer represented by the formula (5) include perfluoro(3,6-dioxa-1-heptene), perfluoro(3,6-dioxa-1-octene) and perfluoro(5-methyl-3,6-dioxa-1-nonene).

In the case where the fluorinated copolymer has TFE units, the content of TFE units to all the units in the fluorinated copolymer is preferably 50 to 80 mol%, more preferably 55 to 75 mol%, still more preferably 65 to 73 mol%, particularly preferably 67 to 71 mol%.

In the case where the fluorinated copolymer has PAVE units, the content of PAVE units to all the units in the fluorinated copolymer is preferably 20 to 50 mol%, more preferably 25 to 45 mol%, still more preferably 27 to 35 mol%, particularly preferably 29 to 33 mol%.

In the case where the fluorinated copolymer has DVE units, the content of DVE units to all the units in the fluorinated copolymer is preferably 0.01 to 1 mol%, more preferably 0.03 to 0.5 mol%, still more preferably 0.05 to 0.3 mol%, particularly preferably 0.1 to 0.15 mol%.

In the case where the fluorinated copolymer has VdF units, the content of VdF units to all the units in the fluorinated copolymer is preferably 50 to 78 mol%, more preferably 55 to 77 mol%.

In the case where the fluorinated copolymer has HFP units, the content of HFP units to all the units in the fluorinated copolymer is preferably 22 to 50 mol%, more preferably 23 to 45 mol%.

In the case where the fluorinated copolymer has propylene units, the content of propylene units to all the units in the fluorinated copolymer is preferably 20 to 80 mol%, more preferably 40 to 50 mol%.

With a view to obtaining the rubber composition with lower haze, the fluorinated copolymer preferably has TFE units and PAVE units, more preferably TFE units and PMVE units.

In the case where the fluorinated copolymer has TFE units and PAVE units, the ratio (TEF units/PAVE units) of the content of TFE units to the content of PAVE units (preferably, PMVE units) in the fluorinated copolymer is preferably 80/20 to 50/50, more preferably 75/25 to 55/45, still more preferably 73/27 to 65/35, particularly preferably 67/33 to 71/29, in terms of molar ratio.

Preferred combinations of the respective units in the fluorinated copolymer are as shown below.
Combination 1: combination of TFE units and PAVE units.
Combination 2: combination of TFE units, PAVE units and DVE units.
Combination 3: combination of VdF units and HFP units.
Combination 4: combination of TFE units and propylene units.

Among others, Combination 1 or Combination 2 is preferred in view of heat resistance and chemical resistance of the rubber composition. More preferred is Combination 2.

From the viewpoint of obtaining the rubber composition with high heat resistance and chemical resistance, the following content ratio of the fluorinated copolymer is preferred for Combinations 1 to 4.

Combinations 1 and 2: TFE units/PAVE units = 80/20 to 50/50 (molar ratio); and, in the case where DVE units are contained, (total amount of TFE units + PAVE units)/DVE units = 100/0.01 to 100/1 (molar ratio)
Combination 3: VdF units/HFP units = 50/50 to 78/22 (molar ratio)
Combination 4: TFE units/propylene units = 60/40 to 50/50 (molar ratio)
In Combinations 1 and 2, the PAVE units are preferably PMVE units.

The contents of the respective units to all the units in the fluorinated copolymer can be determined by a known method such as nuclear magnetic resonance (NMR) spectroscopy (¹⁹F-NMR, ¹H-NMR).

The fluorinated copolymer may contain iodine atoms. In this case, the iodine atoms are preferably present at terminal ends of the fluorinated copolymer (polymer chains).

The iodine atoms can be iodine atoms derived from an iodine compound that functions as a chain transfer agent as described later, or iodine atoms in units based on an iodine-containing monomer such as iodotrifluoroethylene among the above-described other halogen-containing monomers, and are preferably iodine atoms derived from an iodine compound that functions as a chain transfer agent.

In the case where the fluorinated copolymer contains iodine atoms, the content of iodine atoms to the total mass of the fluorinated copolymer is preferably 0.01 to 5.0 mass%, more preferably 0.05 to 2.0 mass%. When the content of iodine atoms is in the above range, the fluorinated copolymer is improved in crosslinking reactivity to provide the rubber composition with improved mechanical properties.

### (Method for Producing Fluorinated Copolymer)

As an example of a method for producing the fluorinated copolymer, a method may be mentioned in which the above-described monomers are copolymerized in the presence of a radical polymerization initiator.

Examples of the polymerization method include emulsion polymerization, solution polymerization and suspension polymerization. Preferred is emulsion polymerization in view of good control of molecular weight and copolymer composition and high productivity.

In the case where the fluorinated copolymer is produced by emulsion polymerization, the emulsion polymerization can be carried out by e.g. heating the above monomers in the presence of an aqueous medium, an emulsifier and a radical polymerization initiator.

The aqueous medium is preferably water or a mixed solvent of water and an water-soluble organic solvent.

Examples of the water-soluble organic solvent include tert-butanol, propylene glycol, dipropylene glycol, dipropylene glycol monomethyl ether, tripropylene glycol and the like. Particularly preferred are tert-butanol and dipropylene glycol monomethyl ether.

In the case where the water-soluble organic solvent is contained in the aqueous medium, the content of the water-soluble organic solvent is preferably 1 to 40 parts by mass, more preferably 3 to 30 parts by mass, per 100 parts by mass of water.

The amount of the aqueous medium used is preferably 150 to 400 parts by mass, more preferably 250 to 350 parts by mass, per 100 parts by mass of the monomers.

The radical polymerization initiator is preferably a water-soluble polymerization initiator or a redox polymerization initiator.

Examples of the water-soluble polymerization initiator include: persulfates such as ammonium persulfate, sodium persulfate and potassium persulfate; and organic polymerization initiators such as disuccinic acid peroxide and azobisisobutylamidine dihydrochloride. Among others, persulfates are preferred. More preferred is ammonium persulfate.

Examples of the redox polymerization initiator include polymerization initiators combining persulfates with reducing agents. Among others, preferred are polymerization initiators with which the respective monomers are polymerizable at a polymerization temperature ranging from 0 to 80°C. The persulfate as the constituent of the redox polymerization initiator can be, for example, ammonium persulfate, or an alkali metal salt persulfate such as sodium persulfate or potassium persulfate. Preferred is ammonium persulfate. The reducing agent combined with the persulfate can be, for example, a thiosulfate, a sulfite, a bisulfite, a pyrosulfite or a hydroxymethanesulfinate. A hydroxymethanesulfinate is preferred. More preferred is sodium hydroxymethanesulfinate.

In the production of the fluorinated copolymer, the above monomers may be copolymerized in the presence of a chain transfer agent in addition to the radical polymerization initiator.

The chain transfer agent is preferably an iodine compound, more preferably an iodine compound represented by the formula RI₂ where R is an alkylene or perfluoroalkylene group having 3 or more carbon atoms (preferably 3 to 8 carbon atoms).

Specific examples of the iodine compound represented by the formula RI₂ include 1,3-diiodopropane, 1,4-diiodobutane, 1,6-diiodohexane, 1,8-diiodooctane, 1,3-diiodoperfluoropropane, 1,4-diiodoperfluorobutane, 1,6-diiodoperfluorohexane and 1,8-diiodoperfluorooctane.

As the iodine compound, an iodine compound with a perfluoroalkylene group is preferred. Particularly preferred is 1,4-diiodoperfluorobutane.

When the above monomers are copolymerized in the presence of such an iodine compound, iodine atoms are introduced into the fluorinated copolymer.

In the case where the fluorinated copolymer is produced by emulsion polymerization, the fluorinated copolymer may be isolated by agglutination of a latex obtained through the emulsion polymerization.

As a method for agglutination, addition of a metal salt or addition of an inorganic salt such as hydrochloric acid, sulfuric acid or nitric acid may be mentioned. Preferred is addition of an inorganic acid because the thus-obtained fluorinated copolymer is low in metal contamination and is suitably usable for a part (e.g. O-ring) of semiconductor manufacturing equipment.

For the details of the components other than the above-described components used for production of the fluorinated copolymer and the production method, the method described in paragraphs [0019] to [0034] of WO2010/082633 can be referred to.

The content of the fluorinated copolymer in the crosslinkable composition is preferably 60 to 99 mass%, more preferably 70 to 99 mass%, still more preferably 80 to 99 mass%, to the total mass of the crosslinkable composition.

### (Crosslinking Agent)

The crosslinking agent in the crosslinkable composition can be, for example, an organic peroxide or a compound with at least two amino groups (hereinafter also referred to as a "polyamine compound"), and is preferably an organic peroxide.

Examples of the organic peroxide include a dialkyl peroxide, α,α'-bis(tert-butylperoxy)-p-diisopropylbenzene, α,α'-bis(tert-butylperoxy)-m-diisopropylbenzene, benzoyl peroxide, tert-butylperoxybenzene, 2,5-dimethyl-2,5-bis(benzoylperoxy)hexane, tert-butyl cumylperoxide and dicumylperoxide.

As examples of the dialkyl peroxide, 1,1-bis(tert-butylperoxy)-3,3,5-trimethylcyclohexane, 2,5-dimethylhexane-2,5-dihydroxyperoxide, 2,5-dimethyl-2,5-bis(tert-butylperoxy)hexane, 2,5-dimethyl-2,5-bis(tert-butylperoxy)-3-hexyne, tert-butylperoxymaleic acid and tert-butylperoxyisopropyl carbonate may be mentioned. Among others, 2,5-dimethyl-2,5-bis(tert-butylperoxy)hexane and 2,5-dimethyl-2,5-bis(tert-butylperoxy)-3-hexyne are preferred in view of availability.

Examples of the polyamine compound include hexamethylenediamine, hexamethylenediamine carbamate, 2,2-bis[4-(4-aminophenoxy)phenyl]propane, 2,2-bis(3-amino-4-hydroxyphenyl)propane, 2,2-bis(3-amino-4-hydroxyphenyl)hexafluoropropane (hereinafter also referred to as "BOAP"; also known as bisaminophenol AF), 2,2-bis(3,4-diaminophenyl)propane, 2,2-bis(3,4-diaminophenyl)hexafluoropropane, 2,2-bis(3-amino-4-(N-phenylamino)phenyl)hexafluoropropane, 4,4'-methylenedianiline, m-phenylenediamine, adipic dihydrazide and a compound represented by the formula (XII) of Japanese Patent No. 5833657.

The content of the crosslinking agent in the crosslinkable composition is preferably less than 1.0 part by mass, more preferably 0.8 part by mass or less, still more preferably 0.6 part by mass or less, per 100 parts by mass of the fluorinated copolymer. The content of the crosslinking agent may be, for example, 0.01 part by mass or more per 100 parts by mass of the fluorinated copolymer.

### (Crosslinking Aid)

The crosslinkable composition may preferably further contain a crosslinking aid to improve the crosslinking reactivity of the fluorinated copolymer.

Above all, a compound with at least two polymerizable unsaturated bonds is preferred as the crosslinking aid from the viewpoint of obtaining the rubber composition with lower haze.

The polymerizable unsaturated bonds can be, for example, carbon-carbon double bonds (C=C) or carbon-carbon triple bonds (C≡C), and are preferably carbon-carbon double bonds (C=C) with a view to achieving higher crosslinking reactivity.

The number of polymerizable unsaturated bonds in the crosslinking aid is preferably 2 to 6, more preferably 2 to 4, still more preferably 2 or 3. A compound with at least two double bonds is more preferred.

Preferred examples of the compound with at least two double bonds include triallyl cyanurate, triallyl isocyanurate, trimethallyl isocyanurate, triacryl formal, triallyl trimellitate, N,N'-m-phenylene bismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, triallyl phosphite, N,N-diallylacrylamide, N,N,N',N'-tetraallylphthalamide, trivinyl isocyanurate, 2,4,6-trivinylmethyltrisiloxane, tri(5-norbornene-2-methylene)cyanurate, triallyl phosphite, 1,4-divinyl(perfluoro)butane and 1,6-divinyl(perfluorohexane). Triallyl isocyanurate is more preferred in view of availability.

The content of the crosslinking aid is preferably 0.03 to 5 parts by mass, more preferably 0.1 to 4 parts by mass, still more preferably 0.3 to 3 parts by mass, per 100 parts by mass of the fluorinated copolymer.

The crosslinked product of the fluorinated copolymer in the present rubber composition is preferably a cured product of the fluorinated copolymer and the compound with at least two polymerizable unsaturated bonds, more preferably a cured product of the fluorinated copolymer and the compound with at least two double bonds, from the viewpoint of obtaining the rubber composition with lower haze.

The cured product can be obtained by, for example, performing pressurization treatment on the crosslinkable composition that contains the fluorinated copolymer, the compound with at least two polymerizable unsaturated bonds as the crosslinking aid and the crosslinking agent and thereby crosslinking the fluorinate copolymer with the crosslinking aid.

### (Additional Component)

The crosslinkable composition may contain an additional component other than the above-described components within the range that does not impair the effects of the present invention. Examples of the additional component include an acid acceptor (as exemplified by a fatty acid ester, a fatty acid metal salt, a divalent metal oxide (such as magnesium oxide, calcium oxide, zinc oxide or lead oxide) or the like), a filler (except a black filler) capable of functioning as a filling material or reinforcing material (as exemplified by barium sulfate, calcium metasilicate, calcium carbonate, titanium oxide, silicon dioxide, polytetrafluoroethylene (PTFE), clay, talc or the like), a scorch retarder (as exemplified by a phenolic hydroxyl group-containing compound such as bisphenol A, a quinone such as hydroquinone, a α-methylstyrene dimer such as 2,4-di(3-isopropylphenyl)-4-methyl-1-pentene or the like), a crown ether (as exemplified by 18-crown-6) and a releasing agent (as exemplified by sodium stearate).

In the case where the crosslinkable composition contains an additional component other than the fluorinated copolymer, the crosslinking agent, the crosslinking aid and the black filler, the total content of the additional component is preferably more than 0.1 part by mass and 30 parts by mass or less, more preferably 1 to 25 parts by mass, still more preferably 5 to 15 parts by mass, per 100 parts by mass of the fluorinated copolymer.

It is preferred that the crosslinkable composition contains no black filler such as carbon black from the viewpoint of obtaining the rubber composition with high transparency so as to, when the rubber composition is used for a part (e.g. O-ring) of semiconductor manufacturing equipment, facilitate detection of foreign substances.

From the above viewpoint and in view of dispersibility, it is further preferred that the crosslinkable composition contains no material selected from the group consisting of carbon black and carbon nanotubes.

Here, when the crosslinkable composition "contains no" black filler etc., it means that the content of the black filler etc. to the total mass of the crosslinkable composition is 4.7 mass% or less. The content of the black filler etc. may be 0 mass% to the total mass of the crosslinkable composition.

The crosslinkable composition can be prepared by mixing the above respective components. The mixing of the respective components can be done with the use of a rubber mixing machine such as a roller mixer, a kneader, a Banbury mixer or an extruder.

Details of the pressurization treatment for production of the crosslinked product of the fluorinated copolymer to be contained in the present rubber composition will be explained in the later-described method for producing the present rubber composition.

The content of the crosslinked product of the fluorinated copolymer in the present rubber composition is preferably 49 mass% or more, more preferably 94 mass% or more, to the total mass of the present rubber composition. The content of the crosslinked product of the fluorinated copolymer may be 100 mass% to the total mass of the present rubber composition. In the case where the present rubber composition contains an additional component other than the crosslinked product, the content of the crosslinked product is preferably 99 mass% or less to the total mass of the present rubber composition.

### <Additional Component Other Than Crosslinked Product of Fluorinated Copolymer>

The present rubber composition may contain an additional component other than the crosslinked product of the fluorinated copolymer. The additional component can be any component except the fluorinated copolymer and the crosslinking aid, among the components of the above-described crosslinkable composition, and a residue derived therefrom.

In the case where the rubber composition contains an additional component as described above, the content of the additional component is preferably 0.1 to 50 mass%, more preferably 1 to 10 mass%, still more preferably 1 to 5 mass%, to the total mass of the rubber composition.

Further, it is preferred that the rubber composition contains no black filler (e.g. carbon black or the like). The rubber composition with no black filler is high in transparency so as to, when used for a part (such as O-ring) of semiconductor manufacturing equipment, facilitate detection of adhered foreign substances.

Here, the expression "the rubber composition contains no black filler" means that the content of the black filler to the total mass of the rubber composition is 4.7 mass% or less. The content of the black filler to the total mass of the rubber composition may be 0 mass%.

The shape and size of the rubber composition is not particularly limited, and the rubber composition can be formed and used in a desired shape and size depending on its intended use.

### [Physical Properties of Rubber Composition]

### <Temperature T for Minimum Storage Modulus E'ₘᵢₙ>

The present rubber composition is characterized in that the temperature T at which the present rubber composition shows a minimum storage modulus E'ₘᵢₙ as measured by dynamic mechanical analysis at a measurement temperature of 23 to 200°C and a measurement frequency of 1 Hz is 55°C or higher.

The above temperature T is preferably 65°C or higher, more preferably 70°C or higher, from the viewpoint of obtaining the present rubber composition with lower haze.

Further, the above temperature T is preferably 150°C or lower, more preferably 120°C or lower, still more preferably 100°C or lower, with a view to achieving higher processability.

The above temperature T is obtained by conducting dynamic mechanical analysis of the rubber composition at a measurement frequency of 1 Hz within the range of 23 to 200°C to measure the storage modulus E' of the rubber composition, and determining the temperature at which the measured storage modulus E takes a minimum value (minimum storage modulus E'ₘᵢₙ).

Accordingly, the temperature T obtained by the above measurement method is any temperature within the range of 23 to 200°C.

In the present invention, in the case where the storage modulus E' shows a plurality of minimum values as measured by the above dynamic mechanical analysis, the lowest-temperature minimum value among the plurality of minimum values is regarded as the minimum storage modulus E'ₘᵢₙ. In the case where the storage modulus shows a plurality of minimum values including the lowest minimum value and the minimum value different from the lowest minimum value, the lowest minimum value is regarded as the minimum storage modulus E'ₘᵢₙ.

The storage modulus E' of the rubber composition is a value measured by a dynamic mechanical analyzer (e.g. "DMA7100" manufactured by Hitachi High-Tech Corporation) in accordance with ASTM D5289 and ASTM D6204. Detailed measurement conditions of the storage modulus E' will be described later in Examples.

The temperature T at which the rubber composition shows a minimum storage modulus E'ₘᵢₙ can be adjusted according to, for example, the constitution of the present rubber composition, the types and contents of the respective components in the crosslinkable composition, the later-described rubber composition production conditions (in particular, the pressure and temperature conditions of the pressurization treatment) and the like.

The minimum storage modulus E'ₘᵢₙ of the rubber composition as measured by the above dynamic mechanical analysis is preferably 2.4 to 3.1 MPa, more preferably 2.5 to 3.0 MPa, in view of better balance between the haze and the mechanical properties of the rubber composition.

### [Method for Producing Rubber Composition]

As an example of the method for producing the present rubber composition, a method may be mentioned the crosslinkable composition containing the fluorinated copolymer and the crosslinking agent is subjected to pressurization treatment under specific conditions to obtain a precursor composition, and then, the precursor composition obtained by the pressurization treatment is subjected to heat treatment.

Here, the method for producing the present rubber composition from the crosslinkable composition by pressurization treatment and heat treatment will be described in detail below with reference to the drawings. It should however be noted that the following method is an example of the method for producing the present rubber composition from the crosslinkable composition and is not intended to limit the method for producing the present rubber composition thereto.

### <Pressurization Treatment>

Fig. 1 is a schematic cross-sectional view illustrating a configuration example of a press machine used for production of the precursor composition for the present rubber composition.

Illustrated is a press machine 10 for pressurization treatment, having a cylinder 1, a slider 2, an upper mold 3, a lower mold 4, a bolster 5 and a pressure gauge 6.

The cylinder 1 functions to move the slider 2, which is connected to the cylinder 1, in a vertical direction of the page indicated by an arrow by operation of a driving device (not shown). An upper surface of the upper mold 2, which is one of the molds, is connected to a lower surface of the slider 2 such that the upper mold 3 moves together with the slider 2 in the same one direction.

The lower mold 4, which is the other of the molds, is disposed below the upper mold 3. A lower surface of the lower mold 4 is connected to an upper surface of the bolster 5 that is fixed so as not to move in the vertical direction.

Further, a convex core 3a is formed on a lower surface of the upper mold 3, and a concave cavity 4a is formed in an upper surface of the lower mold 4. The core 3a and the cavity 4a are arranged at positions facing each other in the vertical direction of the page (the opening/closing direction of the molds) and are shaped according to the desired shape of the rubber composition.

The pressure gauge 6 is disposed to measure the pressure exerted on the cylinder 1 during the pressurization treatment.

Using the press machine 10 shown in Fig. 1, the pressurization treatment is performed on the crosslinkable composition as follows. First, the composition X (crosslinkable composition) is put in the cavity 4a of the lower mold 4. Before the composition X is put in the cavity 4a, the upper mold 3 and the lower mold 4 may be preheated.

Next, the slider 2 and the upper mold 3 are moved downward by the cylinder 1 to close the upper and lower molds 3 and 4. With this, the pressurization treatment is performed to pressurize the composition X at a predetermined pressure from the core 3a of the upper mold 3 and the cavity 4a of the lower mold 4 while heating the composition X at a predetermined temperature.

After the lapse of a predetermined time, the slider 2 and the upper mold 3 are moved upward by the cylinder 1 to separate the upper and lower molds 3 and 4 and remove the pressure on the composition X. The pressurization treatment is then completed.

This pressurization treatment causes reaction (crosslinking) of the fluorinated copolymer and the crosslinking agent, thereby obtaining the precursor composition.

The shape and size of the precursor composition obtained by the pressurization treatment can be selected as appropriate depending on the intended use of the rubber composition.

After the pressurization treatment, the precursor composition may be trimmed by cutting or the like as needed.

As a result of studies made by the present inventors on the relationship between the magnitude of pressure applied to the crosslinkable composition during the above-described pressurization treatment and the properties of the rubber composition obtained by the above-described pressurization treatment and the later-described heat treatment, it has surprisingly been seen that, when the pressurization treatment is performed to apply a lower surface pressure to the crosslinkable composition, the thus-obtained rubber composition tends to be lower in haze.

More specifically, the crosslinkable composition is pressurized at a surface pressure of preferably 6.0 MPa or lower, more preferably 5.0 MPa or lower, still more preferably 4.8 MPa or lower, during the pressurization treatment under a temperature condition of 150°C or higher and lower than 155°C from the view of obtaining the rubber composition with lower haze. Under a temperature condition of 155°C or higher, the crosslinkable composition is pressurized at a surface pressure of preferably 10 MPa or lower, more preferably 8.0 MPa or lower, still more preferably 7.3 MPa or lower.

With a view to achieving higher dimensional stability and mold releasability, the crosslinkable composition is pressurized at a surface pressure of preferably 1.0 MPa or higher, more preferably 2.0 MPa or higher, still more preferably 4.0 MPa or higher, during the pressurization treatment under a temperature condition of 150°C or higher and lower than 155°C. Under a temperature condition of 155°C or higher, the crosslinkable composition is pressurized at a surface pressure of preferably 1.0 MPa or higher, more preferably 3.0 MPa or higher, still more preferably 5.0 MPa or higher.

Here, the term "surface pressure" refers to the degree of pressure actually applied to the crosslinkable composition by the pressurization treatment.

In the press machine 10 shown in Fig. 1, the pressure gauge 6 is provided as a pressure meter to measure the degree of pressure exerted on the molds (upper and lower molds 3 and 4). However, the pressure meter such as pressure gauge 6 connected to the cylinder 1 normally measures the pressure applied to the cylinder during the pressurization treatment and does not measure the pressure applied to the target material in the cavity 4a of the mold.

Taking the press machine 10 of Fig. 1 as an example, the surface pressure Y applied to the composition X is determined according to the following formula (P) from the contact area A between the cylinder 1 and the slider 2, the orthographic projection area B of the space occupied by the composition X in the cavity 4a (the molding region inside the molds) in the opening/closing direction of the molds (the direction of movement of the slider 2) and the pressure C applied to the slider 2 by the cylinder 1 during the pressurization treatment. $Y = \left(C\times A\right) / B$

The contact area A between the cylinder 1 and the slider 2 is also called a ram area. In the case of the cylinder being cylindrical in shape and movable in an axial direction, the diameter of the bottom surface of the cylinder is also referred to as a "ram diameter". The contact area A is determined from the ram diameter R according to the formula "A = π×R²/4".

Further, the pressure C is a pressure value measured by the pressure gauge 6 in the press machine 10.

The temperature condition of the pressurization treatment is preferably 150°C or higher, more preferably 155°C or higher, still more preferably 160°C or higher, from the viewpoint of obtaining the rubber composition with lower haze.

From the viewpoint of obtaining the rubber composition with further lower haze, the pressurization treatment is preferably performed under the conditions of a surface pressure of 8.0 MPa or lower and a temperature of 155°C or higher, more preferably under the conditions of a surface pressure of 8.0 MPa or lower and a temperature of 160°C or higher.

The temperature condition of the pressurization treatment is preferably 200°C or lower, more preferably 170°C or lower, in view of more suppressed energy consumption.

The time of the pressurization treatment is selected as appropriate depending on the pressure and temperature, and is preferably 1 to 30 minutes, more preferably 5 to 20 minutes.

### <Heat Treatment>

The present rubber composition is yielded by further performing heat treatment on the precursor composition obtained through the above-described heat treatment.

The heat treatment can be performed by known heating means such as an oven using electricity, hot air, steam or the like as a heat source.

The temperature of the heat treatment is preferably 200 to 350°C, more preferably 230 to 310°C.

The time of the heat treatment is selected as appropriate depending on the temperature, and is preferably 0.1 to 24 hours, more preferably 1 to 5 hours.

By performing the heat treatment on the precursor composition within the above-described range, the rubber composition is obtained with improved mechanical properties and rubber properties and with low-molecular-weight impurities such as peroxides reduced by decomposition and volatilization.

### [Applications]

The present rubber composition is suitable as materials for O-rings, seats, gaskets, oil seals, diaphragms, V-rings and the like. Further, the present rubber composition and the crosslinked rubber article are applicable to various uses such as heat-resistant and chemical-resistant sealing materials, heat-resistant and oil-resistant sealing materials, electric wire coating materials, sealing materials for semiconductor devices, sealing materials for liquid crystal display panel manufacturing equipment, sealing materials for light emitting diode manufacturing equipment, corrosion-resistant rubber coatings, sealing materials for urea-resistant grease, rubber paints, adhesive rubbers, hoses, tubes, calender sheets (rolls), sponges, rubber rolls, oil drilling members, heat dissipation sheets, solution crosslinked products, rubber sponges, bearing seals (such as urea-resistant grease), linings (such as chemical-resistant linings), insulating sheets for vehicles, insulating sheets for electronic equipment, rubber bands for clocks and watches, packings (amine-resistant packings) for endoscopes, bellows hoses (processed products from calendared sheets), packings/valves for water heaters, fenders (for ocean civil engineering and shipping), fibers and non-woven fabrics (for e.g. protective clothing), base sealing materials, rubber gloves, stators of uniaxial eccentric screw pumps, parts for urea SCR systems, anti-vibration agents, damping agents, sealants, additives for other materials, toys etc.

Among others, the present rubber composition is particularly suitably applied to members of semiconductor manufacturing equipment because the present rubber composition is low in haze and high in transparency so as to allow easy detection of adhered foreign substances and the like.

When the haze of the present rubber composition is 5.0% or lower, it is easy to check for deterioration (e.g. cracking) of the present rubber composition. When the haze of the rubber composition exceeds 5.1%, it becomes difficult to check for deterioration of the present rubber composition.

### EXAMPLES

The present invention will be now described in further detail with reference to Examples. Here, Ex. 1, Ex. 5, Ex. 6, Ex. 10, Ex. 12, Ex. 13, Ex. 15, Ex. 17, Ex. 18 and Ex. 20 are Examples of the present invention; and Ex. 2 to Ex. 4, Ex. 7 to Ex. 9, Ex. 11, Ex. 14, Ex. 16, Ex. 19 and Ex. 21 are Comparative Examples. It should however be understood that the present invention is by no means restricted to these Examples. The content of each component shown in the table below is on a mass basis unless otherwise specified.

### [Production of Fluorinated Copolymers]

Fluorinated copolymers 1 to 5 were produced by the following methods.

### (Fluorinated Copolymer 1)

A stainless steel pressure-resistant reactor equipped with an anchor wing and having an internal capacity of 20 L was deaerated and charged with 8.2 L of ultrapure water, 733 g of a 30 mass% solution of C₂F₅OCF₂CF₂OCF₂COONH₄, 10 g of C3DVE and 15.9 g of a 5 mass% aqueous solution of disodium hydrogenphosphate dodecahydrate. Then, the gas phase in the reactor was replaced with nitrogen. While stirring the contents of the reactor with the anchor wing at a rate of 375 rpm, the temperature inside the reactor was raised to 80°C, after which 198 g of TFE and 454 g of PMVE were injected into the reactor. The pressure inside the reactor was 0.90 MPa [gauge]. Into the reactor, 40 mL of a 1 mass% aqueous solution of ammonium persulfate was added to initiate polymerization. The addition ratio of the monomers (hereinafter also referred to as "initial monomers") injected before the initiation of the polymerization was TFE:PMVE:C3DVE = 41.74:57.64:0.61 in terms of molar ratio.

At the time when the pressure inside the reactor decreased to 0.89 MPa [gauge] with the progress of the polymerization, TFE was injected into the reactor to increase the pressure inside the reactor to 0.90 MPa [gauge]. This operation was repeated, and every time 80 g of TFE was injected, 62 g of PMVE was also injected. Further, 7.0 g of 1,4-diiodoperfluorobutane was injected together with 50 mL of ultrapure water into the reactor from through an ampoule tube at the time when 60 g of TFE was injected.

When the total mass of TFE added reached 1200 g, the addition of the monomers (hereinafter also referred to as "post-added monomers") injected after the initiation of the polymerization was stopped, and the temperature inside the reactor was lowered to 10°C to terminate the polymerization reaction. With this, a latex containing a fluorinated copolymer was obtained. The polymerization time was 360 minutes. The total mass of the post-added monomers added was 1200 g of TFE and 868 g of PMVE, as converted to a molar ratio of TFE:PMVE = 68:32.

Nitric acid (special grade; manufactured by Kanto Chemical Co., Inc.) was dissolved in ultrapure water to prepare a 3 mass% aqueous solution of nitric acid. The latex was added to the nitric acid aqueous solution in a container of TFE/perfluoro(alkyl vinyl ether) copolymer (PFA) so that the fluorinated copolymer was agglutinated. The amount of the nitric acid aqueous solution used was 150 parts by mass per 100 parts by mass of the fluorinated copolymer in the latex.

The agglutinated fluorinated copolymer was recovered by filtration and put into ultrapure water in the container of PFA, followed by stirring at 200 rpm for 30 minutes to wash the fluorinated copolymer. The amount of ultrapure water used was 100 parts by mass per 100 parts by mass of the fluorinated copolymer. The above washing was repeated ten times.

The washed fluorinated copolymer was recovered by filtration and dried under a reduced pressure of 10 kPa at 50°C, thereby yielding the fluorinated copolymer 1. The molar ratio of the respective units in the fluorinated copolymer 1 was TFE units:PMVE units:C3DVE units = 71.40:28.43:0.17. The content of iodine atoms in the fluorinated copolymer was 0.10 mass% as determined by a combined system of an automatic sample combustion and pretreatment device for ion chromatography (model AQF-100, manufactured by Mitsubishi Chemical Analytech Co., Ltd. ) and an ion chromatograph.

### (Fluorinated Copolymer 2)

A stainless steel pressure-resistant reactor equipped with an anchor wing and having an internal capacity of 2100 mL was deaerated and charged with 804 g of ultrapure water, 80.1 g of a 30 mass% solution of C₂F₅OCF₂CF₂OCF₂COONH₄, 0.72 g of C3DVE, 1.8 g of a 5 mass% aqueous solution of disodium hydrogenphosphate dodecahydrate and 0.87 g of 1,4-diiodoperfluorobutane. Then, the gas phase in the reactor was replaced with nitrogen. While stirring the contents of the reactor with the anchor wing at a rate of 600 rpm, the temperature inside the reactor was raised to 80°C, after which 13 g of TFE and 65 g of PMVE were injected into the reactor. The pressure inside the reactor was 0.90 MPa [gauge]. Into the reactor, 20 mL of a 1 mass% aqueous solution of ammonium persulfate was added to initiate polymerization. The addition ratio of the initial monomers was TFE:PMVE:C3DVE = 25:75:0.19 in terms of molar ratio.

At the time when the pressure inside the reactor decreased to 0.89 MPa [gauge] with the progress of the polymerization, TFE was injected to increase the pressure inside the reactor to 0.90 MPa [gauge]. This operation was repeated, and every time 8 g of TFE was injected, 7 g of PMVE was also injected.

When the total mass of TFE added reached 80 g, the addition of the post-added monomers was stopped, and the temperature inside the reactor was lowered to 10°C to terminate the polymerization reaction. With this, a latex containing a fluorinated copolymer was obtained. The polymerization time was 185 minutes. The total mass of the post-added monomers added was 80 g of TFE and 63 g of PMVE, as converted to a molar ratio of TFE:PMVE = 65:35.

Nitric acid (special grade; manufactured by Kanto Chemical Co., Inc.) was dissolved in ultrapure water to prepare a 3 mass% aqueous solution of nitric acid. The latex was added to the nitric acid aqueous solution in a container of PFA so that the fluorinated copolymer was agglutinated. The amount of the nitric acid aqueous solution used was 150 parts by mass per 100 parts by mass of the fluorinated copolymer in the latex.

The agglutinated fluorinated copolymer was recovered by filtration and put into ultrapure water in the container of PFA, followed by stirring at 200 rpm for 30 minutes to wash the fluorinated copolymer. The amount of ultrapure water used was 100 parts by mass per 100 parts by mass of the fluorinated copolymer. The above washing was repeated ten times.

The washed fluorinated copolymer was recovered by filtration and dried under a reduced pressure of 10 kPa at 50°C, thereby yielding the fluorinated copolymer 2 in white color. The molar ratio of the respective units in the fluorinated copolymer 2 was TFE units:PMVE units:C3DVE units = 65.9:34.0:0.1. The content of iodine atoms was 0.15 mass%. The method for determining the content of iodine atoms in the fluorinated polymer was the same as that for the fluorinated polymer 1.

### (Fluorinated Copolymer 3)

The fluorinated copolymer 3 was obtained in accordance with the above-described method for production of the fluorinated copolymer 1, except that: the monomer used was changed from C3DVE to CF₂=CFOCF₂CF(CF₃)OCF₂CF₂CN; the blend amounts of ultrapure water, the solution, the aqueous solution and the monomers were changed; and the polymerization temperature and the stirring rate were changed. The molar units of the respective units in the fluorinated copolymer 3 was TFE units:PMVE units:CF₂=CFOCF₂CF(CF₃)OCF₂CF₂CN units = 59.4:40.1:0.5.

### (Fluorinated Copolymer 4)

The fluorinated copolymer 4 was obtained with reference to the method adopted in Example 5 of WO2017/057512. The molar ratio of the respective units in the fluorinated copolymer 4 was TFE units:P units:C3DVE units = 56.0:43.8:0.2. The iodine content in the fluorinated copolymer 4 was 0.37 mass%.

### (Fluorinated Copolymer 5)

The fluorinated copolymer 5 was obtained with reference to the method adopted in Example 14 of WO2021/010443. The fluorine content in the fluorinated copolymer 5 was 73 mass%.

### [Ex. 1]

### (Production of Crosslinkable Composition)

Mixed were 100 parts by mass of the fluorinated copolymer 1, 0.5 part by mass of TAIC (trade name for triallylisocyanurate, manufactured by Mitsubishi Chemical Corporation, crosslinking aid) and 0.5 part by mass of PERHEXA 25B (trade name for 2,5-dimethyl-2,5-bis(tert-butylperoxy)hexane, manufactured by NOF Corporation, organic peroxide). The resulting mixture was kneaded by two rolls at room temperature for 10 minutes, thereby obtaining a mixed crosslinkable composition 1.

### (Production of Rubber Composition with Crosslinked Product of Fluorinated Copolymer)

As a press machine A, a 50T hydraulic press machine (model: SA-301 50T type, manufactured by TESTER SANGYO CO,. LTD., ram diameter: 180 mm) was provided. The size of the cavity of the mold in the press machine A was rectangular-shaped with a length of 150 mm and a width of 80 mm. The crosslinkable composition 1 was charged in the cavity of the mold and pressurized for 10 minutes under the conditions shown in Table 1 below to obtain a plate-shaped precursor composition 1 with a length of 150 mm, a width of 80 mm and a thickness of 2 mm.

Subsequently, the precursor composition 1 was placed and heat-treated in an oven ("Fine Oven DH612", manufactured by Yamato Scientific Co., Ltd.) at 250°C for 4 hours, to obtain a rubber composition 1 containing a crosslinked product of the fluorinated copolymer 1 and having a plate shape with a length of 150 mm, a width of 80 mm and a thickness of 2 mm.

### [Ex. 2 to Ex. 4]

Rubber compositions 2 to 4, each containing a crosslinked product of the fluorinated copolymer 1, was obtained in accordance with the method described in Ex. 1, except that the pressurization treatment was performed under the conditions shown in Table 1 below.

### [Ex. 5 to Ex. 9]

As a press machine B, a 70T hydraulic press machine (model: H305A2, manufactured by Daishin Kikai Corporation, ram diameter: 225 mm) was provided. Rubber compositions 5 to 9, each containing a crosslinked product of the fluorinated copolymer 1, were obtained in accordance with the method described in Ex. 1, except that, during production of the rubber composition, the press machine B was used instead of the press machine A and the pressurization treatment was performed under the conditions shown in Table 1 below.

### [Ex. 10]

A crosslinkable composition 2 was produced in accordance with the method described in the section "Production of Crosslinkable Composition" of Ex. 1, except that the fluorinated copolymer 2 was used instead of the fluorinated copolymer 1. Subsequently, a rubber composition 10 containing a crosslinked product of the fluorinated copolymer 2 was obtained in accordance with the method described in Ex. 1, except that, during production of the rubber composition, the crosslinkable composition 2 was used instead of the crosslinkable composition 1 and the pressurization treatment was performed under the conditions shown in Table 1 below.

### [Ex. 11]

A rubber composition 11 containing a crosslinked product of the fluorinated copolymer 2 was obtained in accordance with the method described in Ex. 5, except that, during production of the rubber composition, the crosslinkable composition 2 was used instead of the crosslinkable composition 1 and the pressurization treatment was performed under the conditions shown in Table 1 below.

### [Ex. 12]

### (Production of Crosslinkable Composition)

Mixed were 100 parts by mass of the fluorinated copolymer 3 and 0.5 part by mass of silicon nitride (Si₃N₄) (trade name SN-A00, manufactured by UBE Corporation, crosslinking agent). The resulting mixture was kneaded by two rolls at room temperature for 10 minutes, thereby obtaining a mixed crosslinkable composition 12.

### (Production of Rubber Composition with Crosslinked Product of Fluorinated Copolymer)

As a press machine A, a 50T hydraulic press machine (model: SA-301 50T type, manufactured by TESTER SANGYO CO,. LTD., ram diameter: 180 mm) was provided. The size of the cavity of the mold in the press machine A was rectangular-shaped with a length of 150 mm and a width of 80 mm. The crosslinkable composition 12 was charged in the cavity of the mold and pressurized for 10 minutes under the conditions shown in Table 2 below to obtain a precursor composition 12 containing a crosslinked product of the fluorinated copolymer 3 and having a plate shape with a length of 150 mm, a width of 80 mm and a thickness of 2 mm.

Subsequently, the precursor composition 12 was placed and heat-treated in an oven ("Fine Oven DH612", manufactured by Yamato Scientific Co., Ltd.) at 340°C for 48 hours under a nitrogen atmosphere, to obtain a rubber composition 12 containing the crosslinked product of the fluorinated copolymer 3 and having a plate shape with a length of 150 mm, a width of 80 mm and a thickness of 2 mm.

### [Ex. 13 and Ex. 14]

Rubber compositions 13 and 14, each containing a crosslinked product of the fluorinated copolymer 3, were obtained in accordance with the method described in Ex. 12, except that, during production of the rubber composition, a press machine C described below was used and the pressurization treatment was performed under the conditions shown in Table 2.

As the press machine C, provided was a 500T hydraulic press machine (model: P-V-500 500T type, manufactured by PAN STONE PRECISION INDUSTRIES CO., LTD, ram diameter: 599 mm). The size of the cavity of the mold in the press machine C was rectangular-shaped with a length of 150 mm and a width of 80 mm. The crosslinkable composition was charged in the cavity of the mold and pressurized for 10 minutes under the conditions shown in Table 2 below, to obtain the precursor composition containing the crosslinked product of the fluorinated copolymer and having a plate shape with a length of 150 mm, a width of 80 mm and a thickness of 2 mm.

### [Ex. 15]

### (Production of Crosslinkable Composition)

Mixed were 100 parts by mass of the fluorinated copolymer 4, 1.6 parts by mass of TAIC (trade name for triallylisocyanurate, manufactured by Mitsubishi Chemical Corporation, crosslinking aid), 0.6 part by mass of PERHEXA 25B (trade name for 2,5-dimethyl-2,5-bis(tert-butylperoxy)hexane, manufactured by NOF Corporation, organic peroxide) and 0.1 part by mass of calcium stearate. The resulting mixture was kneaded by two rolls at room temperature for 10 minutes, thereby obtaining a mixed crosslinkable composition 15.

### (Production of Rubber Composition with Crosslinked Product of Fluorinated Copolymer)

As a press machine A, a 50T hydraulic press machine (model: SA-301 50T type, manufactured by TESTER SANGYO CO,. LTD., ram diameter: 180 mm) was provided. The size of the cavity of the mold in the press machine A was rectangular-shaped with a length of 150 mm and a width of 80 mm. The crosslinkable composition 15 was charged in the cavity of the mold and pressurized for 10 minutes under the conditions shown in Table 2 below, to obtain a precursor composition 15 containing a crosslinked product of the fluorinated copolymer 4 and having a plate shape with a length of 150 mm, a width of 80 mm and a thickness of 2 mm.

Subsequently, the precursor composition 15 was placed and heat-treated in an oven ("Fine Oven DH612", manufactured by Yamato Scientific Co., Ltd.) at 250°C for 24 hours under a nitrogen atmosphere, to obtain a rubber composition 15 containing the crosslinked product of the fluorinated copolymer 4 and having a plate shape with a length of 150 mm, a width of 80 mm and a thickness of 2 mm.

### [Ex. 16 to Ex. 17]

Rubber compositions 16 to 17, each containing a crosslinked product of the fluorinated copolymer 4, were obtained in accordance with the method described in Ex. 15, except that, during production of the rubber composition, the press machine B or the press machine C was used and the pressurization treatment was performed under the conditions shown in Table 2.

### [Ex. 18]

### (Production of Crosslinkable Composition)

Mixed were 100 parts by mass of the fluorinated copolymer 5, 2.0 parts by mass of TAIC(trade name for triallylisocyanurate, manufactured by Mitsubishi Chemical Corporation, crosslinking aid), 1.0 part by mass of PERHEXA 25B (trade name for 2,5-dimethyl-2,5-bis(tert-butylperoxy)hexane, manufactured by NOF Corporation, organic peroxide) and 0.1 part by mass of calcium stearate. The resulting mixture was kneaded by two rolls at room temperature for 10 minutes, thereby obtaining a mixed crosslinkable composition 18.

### (Production of Rubber Composition with Crosslinked Product of Fluorinated Copolymer)

As a press machine A, a 50T hydraulic press machine (model: SA-301 50T type, manufactured by TESTER SANGYO CO,. LTD., ram diameter: 180 mm) was provided. The size of the cavity of the mold in the press machine A was rectangular-shaped with a length of 150 mm and a width of 80 mm. Using the press machine A, the crosslinkable composition 18 was charged in the cavity of the mold and pressurized for 10 minutes under the conditions shown in Table 2 below, to obtain a precursor composition 18 containing a crosslinked product of the fluorinated copolymer 5 and having a plate shape with a length of 150 mm, a width of 80 mm and a thickness of 2 mm.

Subsequently, the precursor composition 18 was placed and heat-treated in an oven ("Fine Oven DH612", manufactured by Yamato Scientific Co., Ltd.) at 180°C for 4 hours under a nitrogen atmosphere, to obtain a rubber composition 18 containing the crosslinked product of the fluorinated copolymer 5 and having a plate shape with a length of 150 mm, a width of 80 mm and a thickness of 2 mm.

### [Ex. 19 to Ex. 21]

Rubber compositions 19 to 21, each containing a crosslinked product of the fluorinated copolymer 5, were obtained in accordance with the method described in Ex. 18, except that, during production of the rubber composition, the press machine A or the press machine C was used and the pressurization treatment was performed under the conditions shown in Table 2.

### [Measurements]

The following measurements were made on the rubber compositions 1 to 21 obtained in Ex. 1 to Ex. 21.

### <Dynamic Mechanical Analysis>

Each of the plate-shaped rubber compositions 1 to 21 obtained in the above respective Ex. was punched out by a lever-controlled sample cutter (type: SDL-100, manufactured by DUMBBELL CO., LTD.) to form a test specimen with a size of 85 mm in length and 45 mm in width. For formation of the test specimen, the punching was carried out in a state that the plate-shaped rubber composition was set with its longitudinal direction parallel to that of the test specimen and its center aligned with that of the test specimen.

The formed test specimen was set in a dynamic mechanical analyzer ("DMA7100" manufactured by Hitachi High-Tech Corporation) and measured by dynamic mechanical analysis under the following measurement conditions. From the measurement results, the minimum value E'ₘᵢₙ of the storage modulus E' (unit: Pa) in the range of 23 to 200°C and the temperature T (unit: °C) at which the minimum value E'ₘᵢₙ was observed were determined. The accurate dimensions of the test specimen were measured before the measurement of the test specimen by the dynamic mechanical analyzer and were reflected in the calculation of the storage modulus.

### (Temperature Condition)

### Lamp mode

Temperature program (start temperature: 23 [°C], end temperature: 200 [°C], temperature increase rate: 3 [°C/min], sampling time: 3 [s])

### (Setting Conditions)

Measurement mode: Tensile
DMA frequency :1 Hz
Frequency mode: Sine wave
Strain amplitude: 10 µm
Minimum tension: 100 mN
Tension gain: 1.5
Initial value of force amplitude: 100 mN
Gas: Air

Here, the automatic offset adjustment function of the measurement program was affected before each measurement.

### <Haze>

Each of the rubber compositions 1 to 21 obtained in the above respective Ex. was measured for the haze with the use of a haze meter (model "NDA500H", manufactured by NIPPON DENSHOKU INDUSTRIES Co., Ltd.) in accordance with the method defined in JIS K7105. More specifically, among main surfaces of the plate-shaped rubber composition, the main surface facing the cavity of the mold during the pressurization treatment for production of the precursor composition was irradiated with measurement light from the haze meter to measure the diffuse transmittance (Td) and total transmittance (Tt) of the rubber composition, and the haze was calculated from the measured transmittance values according to the following formula. $Haze \left(%\right) = Td / Tt \times 100$

The above haze measurement was conducted four times, replacing the rubber composition sample each time. An arithmetic mean of the measured values was taken as the haze of the rubber composition of each Ex.

As for each Ex., the fluorinated copolymer used for production of the rubber composition, the press machine and pressurization treatment conditions used in the pressurization treatment for production of the precursor composition and the measurement results of the temperature T at which the minimum storage modulus E'ₘᵢₙ was observed, the minimum storage modulus E'ₘᵢₙ and the haze are shown in Table 1.

In the table, the "gauge pressure [MPa]" refers to the pressure exerted on the cylinder of each press machine during the pressurization treatment.

Further, the "surface pressure [MPa]" refers to the pressure applied to the crosslinkable composition in the cavity of the mold, as determined according to the above-described formula (P) from the contact area A between the cylinder and the slider, the orthographic projection area B of the space occupied by the crosslinkable composition in the cavity of the mold in the opening/closing direction of the molds and the gauge pressure C. The contact area A was calculated from the ram diameter of each press machine.

**Table 1**

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|
| Fluorinated copolymer | | 1 | 1 | 1 | 1 | 1 | 1 | 1 | 1 | 1 | 2 | 2 |
| Press machine | | A | A | A | A | B | B | B | B | B | A | A |
| Pressurization treatment | Temp. [°C] | 150 | 150 | 140 | 140 | 160 | 155 | 150 | 145 | 140 | 160 | 160 |
| | Gauge pressure [Mpa] | 2.1 | 21 | 2.1 | 21 | 2.1 | 2.1 | 2.1 | 2.1 | 2.1 | 2.1 | 21 |
| | Surface pressure [Mpa] | 4.5 | 45 | 4.5 | 45 | 7.0 | 7.0 | 7.0 | 7.0 | 7.0 | 4.5 | 45 |
| Temp. T [°C] | | 60.7 | 48.8 | 53.7 | 54.2 | 79.8 | 70.0 | 54.2 | 53.2 | 53.7 | 55.9 | 43.5 |
| E'ₘᵢₙ [Mpa] | | 2.7 | 2.4 | 2.4 | 2.4 | 3.0 | 2.9 | 3.1 | 3.1 | 3.3 | 2.5 | 2.3 |
| Haze [%] | | 4.5 | 5.3 | 88 | 67 | 3.8 | 4.0 | 5.1 | 10.4 | 22.1 | 5.0 | 7.7 |

**Table 2**

| | | Ex. 12 | Ex. 13 | Ex. 14 | Ex. 15 | Ex. 16 | Ex. 17 | Ex. 18 | Ex. 19 | Ex. 20 | Ex. 21 |
|---|---|---|---|---|---|---|---|---|---|---|---|
| Fluorinated copolymer | | 3 | 3 | 3 | 4 | 4 | 4 | 5 | 5 | 5 | 5 |
| Press machine | | A | C | C | A | A | B | A | A | C | C |
| Pressurization treatment | Temp. [°C] | 160 | 200 | 200 | 180 | 180 | 150 | 160 | 160 | 170 | 170 |
| | Gauge pressure [Mpa] | 2.1 | 0.5 | 10 | 2.1 | 21 | 2.1 | 2.1 | 21 | 0.5 | 10 |
| | Surface pressure [Mpa] | 4.5 | 10 | 200 | 4.5 | 45.0 | 7.0 | 7.0 | 45 | 10 | 200 |
| Temp. T [°C] | | 150.0 | 66.1 | 54.4 | 100.0 | 32.0 | 102.0 | 99.0 | 54.2 | 118.0 | 54.2 |
| E'min [Mpa] | | 1.7 | 2.1 | 2.2 | 2.5 | 2.9 | 3.1 | 3.0 | 2.9 | 3.1 | 2.9 |
| Haze [%] | | 1.9 | 4.9 | 5.1 | 4.9 | 10.0 | 5.0 | 4.9 | 6.2 | 4.7 | 5.1 |

As shown in Tables 1 and 2, it has been confirmed that the rubber composition containing the crosslinked product of the fluorinated copolymer and having a temperature T of 55°C or higher at which the rubber composition showed a minimum value of storage modulus E' (minimum storage modulus E'ₘᵢₙ) in dynamic mechanical analysis at a measurement temperature of 23 to 200°C and a measurement frequency of 1 Hz is lower in haze than the rubber composition having a temperature T of lower than 55°C.

The entire disclosure of Japanese Patent Application No. 2023-172422 filed on October 4, 2023, including specification, claims, drawings and summary, is incorporated herein by reference in its entirety.

### REFERENCE SYMBOLS

1: Cylinder
2: Slider
3: Upper mold
3a: Core
4: Lower mold
4a: Cavity
5: Bolster
6: Pressure gauge
10: Press machine

## Claims

1. A rubber composition comprising a crosslinked product of a fluorinated copolymer,
wherein the temperature T at which the rubber composition shows a minimum value of storage modulus E' in dynamic mechanical analysis at a measurement temperature of 23 to 200°C and a measurement frequency of 1 Hz is 55°C or higher.

2. The rubber composition according to Claim 1, comprising no black filler.

3. The rubber composition according to Claim 1 or 2, wherein the fluorinated copolymer has units based on tetrafluoroethylene and units based on perfluoromethyl vinyl ether.

4. The rubber composition according to Claim 3, wherein the ratio of the content of the units based on tetrafluoroethylene to the content of the units based on perfluoromethyl vinyl ether in the fluorinated copolymer is 73/27 to 65/35 in terms of molar ratio.

5. The rubber composition according to Claim 1 or 2, wherein the crosslinked product is a crosslinked product of the fluorinated copolymer and a compound with at least two double bonds.

6. A method for producing a rubber composition, comprising:
providing a crosslinkable composition containing a fluorinated copolymer and a crosslinking agent;
performing pressurization treatment on the crosslinkable copolymer to obtain a precursor composition; and
performing heat treatment on the precursor composition obtained by the pressurization treatment,
wherein the pressurization treatment is performed to pressurize the crosslinkable composition at a surface pressure of 6.0 MPa or lower under a condition of 150°C or higher and lower than 155°C, or to pressurize the crosslinkable composition at a surface pressure of 10 MPa or lower under a condition of 155°C or higher.
